(19) Europäisches Patentamt
European Patent Office
Office européen des brevets

(11) EP 1 610 244 A1

(12) # EUROPEAN PATENT APPLICATION
published in accordance with Art. 158(3) EPC

(43) Date of publication:
**28.12.2005 Bulletin 2005/52**

(21) Application number: **04713239.4**

(22) Date of filing: **20.02.2004**

(51) Int Cl.$^{7}$: **G06F 17/60**

(86) International application number:
**PCT/JP2004/002010**

(87) International publication number:
**WO 2004/088555 (14.10.2004 Gazette 2004/42)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.03.2003 JP 2003091520**

(71) Applicant: **HONDA MOTOR CO., Ltd.**
**Tokyo 107-8556 (JP)**

(72) Inventors:
- **NEMOTO, Yoshio, Honda Motor Co., Ltd.**
  **Tokyo 1078556 (JP)**
- **ARAI, Makoto, Honda Motor Co., Ltd.**
  **Tokyo 1078556 (JP)**
- **ARITA, Shozo, Honda Motor Co., Ltd.**
  **Tokyo 1078556 (JP)**
- **SAWADO, Hiroshi, Honda Motor Co., Ltd.**
  **Tokyo 1078556 (JP)**

(74) Representative: **Prechtel, Jörg et al**
**Weickmann & Weickmann,**
**Patentanwälte,**
**Postfach 860 820**
**81635 München (DE)**

(54) **TRANSPORTATION MANAGEMENT SUPPORT SYSTEM**

(57) A transportation management supporting system includes a transportation managing database 21, a distribution cost calculating section 12, a distribution simulation section 14, an emission material calculating section 13 and an emission material simulation section 15. The transportation managing database 21 stores distribution data related to physical distribution. The distribution cost calculating section 12 calculates a distribution cost result data indicating a result of a physical distribution cost. The distribution simulation section 14 estimates a first reduction rate for the cost reduction measures. The emission material calculating section 13 calculates an emission material result data indicating a result of an emission material emitting quantity. The emission material simulation section 15 estimates a second reduction rate for the emission material reduction measures. The cost reduction measure is generated based on the distribution cost result data, and indicates measures for reducing the physical distribution cost against the result of the physical distribution cost. The emission material reduction measure is generated based on the emission material result data, and indicates measures for reducing the emission material emitting quantity against the result of the emission material emitting quantity. The distribution simulation section 14 estimates a third reduction rate for the emission material reduction measures, and outputs the first and third reduction rate. The emission material simulation section estimates a fourth reduction rate for the cost reduction measures, and outputs the second and fourth reduction rate.

Fig. 1

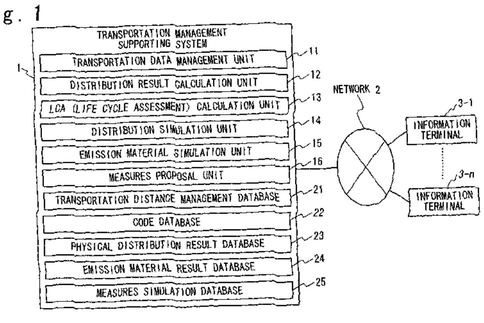


EP 1 610 244 A1

## Description

## Technical Field

The present invention is related to a transportation management supporting system. More particularly, the present invention relates to a transportation management supporting system for distribution of products.

## Background Art

In the manufacturing industry, parts and final products are distributed among bases such as factories, warehouses and dealer shops. The distribution methods for these items are exemplified by land transportation by trucks, marine transportation by ships and air transportation by airplanes. Fossil fuel is often used as an energy source for such various types of transportation methods. In this case, through burning the fossil fuel, those emission materials or pollutant materials are generated such as carbon dioxide, NOx (nitrogen oxide), SOx (sulfur oxide), HC (hydrocarbon) and particulate.

In recent years, the global environmental issues have been receiving worldwide attention and the above-mentioned emission materials are regarded as environmental pollutants. Companies in the manufacturing industry emit those emission materials. Therefore, they have recognized a corporate responsibility of restraining an amount of emission of the emission materials and have made efforts to reduce the amount of the emission materials in the their business.

In this case, the companies also make efforts to reduce distribution cost at the same time. Therefore, the companies are carrying out general measures to reduce the physical distribution cost and to reduce the amount of emission of the emission materials simultaneously.

Here, it is needed to collect a plenty of data for planning such simultaneous measures. The planning requires much time. Also, it is also needed to collect a plenty of data for confirming the effects of the measures. The confirmation also requires much time. Therefore, it is desired to establish a technique that is possible to easily find the optimal measures in consideration with the balance of reducing the physical distribution cost and reducing the amount of the emission materials. Also, it is desired to establish a technique that is possible to confirm the effects of the measures easily.

In conjunction with the above description, Japanese Laid Open Patent Application (JP-P2002-352372A) discloses a following transportation rationalization supporting system. The transportation rationalization supporting system makes all sets between a plurality of transportation means and a plurality of routes, and obtains a set of a transportation means and a route in which a distribution cost to the transportation destination of each order is minimum including actual distribution cost, based on retrieval in a transportation means/route data file, a map data file and a cost data file. Here, the transportation means/route data file stores at least available transportation means and routs to each of the transportation destinations in an actual transpiration database having at least a transportation means, a transpiration unit, and a transportation cost at arrival and departure place. The map data file stores data that can be used for a calculation of a distance between at least two points. The cost data file stores data which is a tariff corresponding to at least the transportation means.

The object of the above technique is to provide a system that calculate an optimal transportation means and route to each transportation destination, and support the reduction and the rationalization of transportation cost.

Disclosure of Invention

Therefore, an object of the present invention is to provide a transportation management supporting system that can easily establish measures for reducing an amount of emission of emission materials.

Another object of the present invention is to provide a transportation management supporting system that can easily establish measures for reducing a distribution cost.

Still another object of the present invention is to provide a transportation management supporting system that can easily evaluate an interaction between the measures for reducing the amount of emission of emission materials and the measures for reducing physical distribution costs.

Yet still another object of the present invention is to provide a transportation management supporting system that can easily obtain the optimal measures based on the effects of the measures for reducing the amount of emission materials and the measures for reducing physical distribution costs.

In order to achieve an aspect of the present invention, a transportation management supporting system includes a transportation managing database, a distribution cost calculating section, a distribution simulation section, an emission material calculating section and an emission material simulation section. The transportation managing database stores distribution data related to physical distribution. The distribution cost calculating section calculates a distribution cost result data indicating a result of a physical distribution cost related to the physical distribution, based on the distribution data. The distribution simulation section estimates a first physical distribution cost for each of a plurality of cost reduction measures, and calculates a first reduction rate indicating a reduction rate of the first physical distribution cost to the result of the physical distribution cost for each of the plurality of cost reduction measures. The emission material calculating section calculates a emission material result data indicating a result of a emission material emitting quantity related to the physical distribution, based on the distribution data. The emission material simulation section estimates a first emission material emitting quantity for each of a plurality of emission material reduction measures, and calculates a second reduction rate indicating a reduction rate of the first emission material emitting quantity to the result of the emission material emitting quantity for each of the plurality of emission material reduction measures. The plurality of cost reduction measures is generated based on the distribution cost result data, and indicates measures for reducing the physical distribution cost against the result of the physical distribution cost. The plurality of emission material reduction measures is generated based on the emission material result data, and indicates measures for reducing the emission material emitting quantity against the result of the emission material emitting quantity. The distribution simulation section estimates a second physical distribution cost for each of the plurality of emission material reduction measures, calculates a third reduction rate indicating a reduction rate of the second physical distribution cost to the result of the physical distribution cost for each of the plurality of emission material reduction measures, and outputs the first reduction rate and the third reduction rate. The emission material simulation section estimates a second emission material emitting quantity for each of the plurality of cost reduction measures, calculates a fourth reduction rate indicating a reduction rate of the second emission material emitting quantity to the result of the emission material emitting quantity for each of the plurality of cost reduction measures, and outputs the second reduction rate and the fourth reduction rate.

In the transportation management supporting system, the emission material includes at least one of carbon dioxide, nitrogen oxides, sulfur oxides, hydrocarbon and particulate.

The transportation management supporting system may further include a measure proposal section which outputs one of the plurality of cost reduction measures and the plurality of emission material reduction measures, that satisfies a predetermined condition, based on the first reduction rate the second reduction rate, the third reduction rate and the fourth reduction rate.

In the transportation management supporting system, the distribution simulation section generates the plurality of cost reduction measures based on the distribution cost result data. The emission material simulation section generates the plurality of emission material reduction measures based on the emission material result data.

In order to achieve another aspect of the present invention, a transportation management supporting method may be achieved by (a) obtaining distribution data related to physical distribution; by (b) calculating a distribution cost result data indicating a result of a physical distribution cost related to the physical distribution, based on the distribution data; by (c) estimating a first physical distribution cost for each of a plurality of cost reduction measures, and calculating a first reduction rate indicating a reduction rate of the first physical distribution cost to the result of the physical distribution cost for each of the plurality of cost reduction measures, wherein the plurality of cost reduction measures is generated based on the distribution cost result data, and indicates measures for reducing the physical distribution cost against the result of the physical distribution cost; by (d) calculating an emission material result data indicating a result of an emission material emitting quantity related to the physical distribution, based on the distribution data; by (e) estimating an first emission material emitting quantity for each of a plurality of emission material reduction measures, and calculating a second reduction rate indicating a reduction rate of the first emission material emitting quantity to the result of the emission material emitting quantity for each of the plurality of emission material reduction measures, wherein the plurality of emission material reduction measures is generated based on the emission material result data, and indicates measures for reducing the emission material emitting quantity against the result of the emission material emitting quantity; by (f) estimating a second physical distribution cost for each of the plurality of emission material reduction measures, calculating a third reduction rate indicating a reduction rate of the second physical distribution cost to the result of the physical distribution cost for each of the plurality of emission material reduction measures; and by (g) estimating a second emission material emitting quantity for each of the plurality of cost reduction measures, calculates a fourth reduction rate indicating a reduction rate of the second emission material emitting quantity to the result of the emission material emitting quantity for each of the plurality of cost reduction measures.

In the transportation management supporting method, the emission material includes at least one of carbon dioxide, nitrogen oxides, sulfur oxides, hydrocarbon and particulate.

The transportation management supporting method may be achieved by further (h) selecting one of the plurality of cost reduction measures and the plurality of emission material reduction measures, that satisfies a predetermined condition, based on the first reduction rate the second reduction rate, the third reduction rate and the fourth reduction rate; and by further (i) displaying the selected measure on a display device.

In the transportation management supporting method, the step (c) includes (c1) generating the plurality of cost reduction measures based on the distribution cost result data. The step (e) includes (e1) generating the plurality of emission material reduction measures based on the emission material result data.

In order to achieve yet still another aspect of the present invention, a computer program product is provided with program code means for carrying out all steps in the above inventions if the program runs on a computer.

In order to achieve yet still another aspect of the present invention, a computer program product is provided with program code means in the above inventions and is stored on a storage means that can be read by the computer.

## Brief Description of Drawings

Fig. 1 is a block diagram showing a configuration of an embodiment of a transportation management supporting system according to the present invention;
Fig. 2 is a block diagram showing a hardware configuration of the transportation management supporting system in the embodiment;
Fig. 3 is a table showing a transportation distance management database;
Fig. 4 is a table showing a code database;
Fig. 5 is a table showing a monthly result data;
Fig. 6 is a table showing a transportation distance data;
Fig. 7A is a table showing a daily shipping result data;
Fig. 7B is a table showing a monthly shipping result data;
Fig. 7C is a table showing an annually total result data;
Fig. 8A is a table showing a daily emission material quantity result data;
Fig. 8B is a table showing a monthly emission material quantity result data;
Fig. 8C is a table showing an annually total emission material quantity result data;
Fig. 9A is a table showing a measure data; and
Fig. 9B is a table showing a measure assessment data; and
Fig. 10 is a flowchart showing the operation of the embodiment of the transportation management supporting system.

## Best Mode for Carrying Out the Invention

Hereinafter, a transportation management supporting system according to the present invention will be described in detail with reference to the attached drawings.

The configuration of the transportation management supporting system according to an embodiment of the present invention will be described bellow. Fig. 1 is a block diagram showing a configuration of the embodiment of the transportation management supporting system according to the present invention. The transportation management supporting system 1 is connected with information terminals 3-i (i=1 to n) interactively through a network 2.

The network 2 is a communication network, for example, a private communication network such as LAN (local area network) and WAN (wide area network), and a public communication network such as the Internet. The information terminals 3-i (i=1 to n) are information processors to be use by a system administrator and users of the transportation management supporting system 1, such as persons in charge of physical distribution. A personal computer, a cellular phone and a PDA (Personal Digital Assistant) exemplify the information processors.

The transportation management supporting system 1 is an information processor such as a personal computer and a workstation. The transportation management supporting system 1 includes a transportation data management unit 11, a distribution result calculation unit 12, an LCA (Life Cycle Assessment) calculation unit 13, a distribution simulation unit 14, an emission material simulation unit 15, and a measures proposal unit 16, which are computer programs executed by a computer. Also, the transportation management supporting system 1 further includes a transportation distance management database 21, a code database 22, a physical distribution result database 23, an emission material result database 24, and a measures simulation database 25, which are computer programs with data used by the computer.

The transportation data management unit 11 obtains physical distribution data and stores them in the transportation distance management database 21. Here, the physical distribution data includes an data related to the loads (products) to be transported (for example, a volume, a weight, numbers), data related to the transportation means (for example, a transportation company, a transportation means, a maximum authorized payload, and a physical distribution cost), data related to the transportation (for example, a transportation source, a transportation destination, a transportation route, a transportation distance, a mixed palletizing rate, and a shipping and arrival time).

The distribution result calculation unit 12 calculates physical distribution cost result data as the result of physical distribution costs based on the physical distribution data and stores them into the physical distribution result database 23. Here, the physical distribution cost result data indicates expenses (the result of the physical distribution cost) in the actual physical distribution. For example, the cost is calculated based on the following equation:

"basic charge + unit price x load quantity (a volume, a weight)". It should be noted that the present invention is not limited by this equation.

The physical distribution cost result data is calculated for each of categories such as a day, a month, a year, transportation means, a transportation company, a transportation source and a transportation destination. Because the management of the physical distribution can be carried out by using a single database, the result of the physical distribution costs can be quickly and easily calculated by the distribution result calculation unit 12.

The LCA calculation unit 13 calculates the emission material emitting result data as a result of an emission material quantity in the physical distribution and stores them into the emission material result database 24. Here, the emission materials are materials emitted (exhausted) from the transportation means during the physical distribution. For example, pollutants such as carbon dioxides, NOx (nitrogen oxide), SOx (sulfur oxide), HC (hydrocarbon) and particulate that are contained in the exhaust gas from the transportation means exemplify the emission materials. The emission material emitting result data is calculated for every actual emission material from the following equation:

"emission material quantity unit of the emission material x transportation distance x load quantity (a volume, a weight)". It should be noted that the present invention is not limited by the above equation. The emission material emitting result data is calculated for every emission material and for each of categories such as a day, a month, a year, transportation means, a transportation company, a transportation source and a transportation destination.

Because the physical distribution can be managed by using a single database, the emission material quantity can be quickly and easily calculated by the LCA calculation unit 13.

The distribution simulation unit 14 calculates the physical distribution costs and a first reduction rate, for each of a plurality of physical distribution cost reduction measures data indicating physical distribution cost reduction measures. Here, the first reduction rate is a reduction rate of the physical distribution costs when each of the plurality of the physical distribution cost reduction measures is executed. The plurality of the physical distribution cost reduction measures data are generated based on the physical distribution cost result data.

Also, the distribution simulation unit 14 calculates the physical distribution costs and a third reduction rate for each of a plurality of emission material reduction measures data indicating emission material reduction measures. Here, the third reduction rate is a reduction rate of the physical distribution costs when each of the plurality of the emission material reduction measures is executed. The plurality of emission material reduction measures data is described later.

The distribution simulation unit 14 outputs the first reduction rate, the third reduction rate, and the calculated physical distribution costs.

The emission material simulation unit 15 calculates the emission material quantity of each emission material and a second reduction rate, for each of a plurality of emission material reduction measures data. Here, the second reduction rate is a reduction rate of the emission material quantity when each of the plurality of the emission material reduction measures is executed. The plurality of the emission material reduction measures data are generated based on the emission material emitting result data.

Also, the emission material simulation unit 15 calculates the emission material quantity of each emission material and a fourth reduction rate, for each of a plurality of physical distribution cost reduction measures data. Here, the fourth reduction rate is a reduction rate of the emission material quantity when each of the plurality of the physical distribution cost reduction measures is executed.

The emission material simulation unit 15 outputs the second reduction rate, the forth reduction rate and the calculated emission material emitting quantities.

The measures proposal unit 16 selects and outputs at least one measure satisfying a predetermined conditions from the plurality of the physical distribution cost reduction measures data and the plurality of emission material reduction measures data, based on the first, the second, the third and the fourth reduction rates. The measures proposal unit 16 may carry out the selection based on the physical distribution costs and the emission material emitting quantities of the measures, when the measures are carried out. The objective emission material may be at least one of all the emission materials observed (measured). Here, the above-mentioned predetermined conditions are, for example, one of the following conditions or their combinations. It should be note that the present invention is not limited by these conditions.

(1) The first condition:

A value that the fourth reduction rate is subtracted from the first reduction rate for each of the plurality of physical distribution cost reduction measures data, and a value that the third reduction rate is subtracted from the second reduction rate for each of the plurality of emission material reduction measures data should be equal to or larger than a predetermined value.

(2) The second condition:

In a pair of the first reduction rate and the forth reduction rate, and a pair of the second reduction rate and the third reduction rate, which are corresponding to each measure, the two kinds of the reduction rates should be equal to or lager than a predetermined value.

(3) The third condition:

A physical distribution cost when each measure is carried out should be equal to or smaller than a predetermined value.

(4) The forth condition:

An emission materials emitting quantity when each measure is carried out should be equal to or smaller than a predetermined value.

By the assessment in accordance with these conditions, the judgment can be done in consideration of the influence of the physical distribution cost reduction measure and the emission materials reduction measure.

The transportation distance management database 21 stores the physical distribution data related to the physical distribution by the transportation means. The code database 22 relates names of data to be used in each database to codes showing the names and stores them. The physical distribution result database 23 stores the physical distribution cost result data as the result with physical distribution costs of the physical distribution, which is calculated based on the physical distribution data. The emission material result database 24 stores the emission material emitting result as the result with the emission material quantity of the physical distribution, which is calculated based on the physical distribution data. The measures simulation database 25 stores the plurality of physical distribution cost reduction measure data, their first reduction rate and fourth reduction rate. It also stores the plurality of exhaustion quantity reduction data, their second reduction rate and third reduction rate.

Next, a configuration of a hard ware of the transportation management supporting system 1 will be described bellow. Fig. 2 is a block diagram showing the configuration of the embodiment of the hard ware of the transportation management supporting system. The transportation management supporting system 1 is an information processor and includes a CPU 5, a memory section 6, a RAM 7, an input/output section 8, a communication interface (I/F) 9 and a bus 10.

The bus 10 is used for receiving and transmitting an address, a data, and a control signal among the CPU 5, the memory section 6, the RAM 7, the input/output section 8 and the communication I/F 9.

The communication I/F 9 controls the receiving and transmitting signals between the transportation management supporting system 1 and the network 2. That is, the communication I/F 9 transmits the signal from the bus 10 to the network 2 and transmits the signal from the network 2 to the bus 10. In Fig. 2, the transportation management supporting system 1 is composed such that the communication I/F 9 connects to the bus 10. However, it is noted that the configuration, in which the communication I/F 9 connects to the CPU 5, is also adaptable.

The CPU 5 executes each program which is exemplified in the above mentioned transportation data management unit 11, the distribution result calculation unit 12, the LCA calculation unit 13, the distribution simulation unit 14, the emission material simulation unit 15 and the measures proposal unit 16. The operation of this CPU 5 will be described later with reference to the flow chart.

The memory section 6 stores data such as above mentioned programs to be executed by the CPU 5 (for example, the transportation data management unit 11, the distribution result calculation unit 12, the LCA calculation unit 13, the distribution simulation unit 14, the emission material simulation unit 15 and the measures proposal unit 16), above mentioned databases (for example, the transportation distance management database 21, the code database 22, the physical distribution result database 23, the emission material result database 24 and the measures simulation database 25), and the result of the programs. The memory section 6 is, for example, hard disk drive (HDD) and ROM.

The RAM 7 is used as a working area for the CPU 5 to execute a data processing in accordance with the programs. In the RAM 7, counters, registers, flags, tables and the like are defined.

The input/output section 8 inputs and outputs data to the transportation management supporting system 1. The input section is exemplified by a keyboard and a mouse, and the output section is exemplified by a display apparatus and printer.

Next, the transportation distance management database 21 will be described blow in detail.

Fig. 3 is a table showing a transportation distance management database. The transportation distance management database 21 stores the physical distribution data as shown in the Fig. 3.

A No.21-1 shows a serial number of the data. A transportation source 21-2 and a transportation destination 21-4 are the places where loads are collected and delivered, respectively. A base division 21-3 and a base division 21-5 correspond to the transportation source 21-2 and the transportation destination 21-4, respectively. The base division means a kind of base of the transportation source 21-2 and the transportation destination 21-4 such as a shipping place, a retail shop of two-wheeled vehicle and four-wheeled vehicle. A transportation route 21-6 shows a route on a map at transportation of loads, in which a basic rout is previously set. A transportation distance 21-7 shows a moving distance between the transportation source and the transportation destination in the transportation route. An identification No.21-8 shows the number to identify the transportation means. A transportation means 21-9 shows a means of carrying out the transportation such as a truck, a ship, and an airplane. They are classified based on a size (for example, the number of the tons), the classification of the fuel (for example, gasoline/diesel oil). A maximum authorized payload 21-10 shows the maximum quantity of the loads of the transportation means. A transportation company 21-11 shows a company that takes charge of the transportation. A unit price 21-12 shows a unit price with the expense (the physical distribution costs), which occurs with this transportation. The unit that decides a unit price is a volume, a number, weight and so on. A volume 21-13 shows a total volume of the loads. It is indicated by a volume and a square meter of the loads. A weight 21-14 shows the gross weight of the loads carried at this transportation. A quantity 21-15 shows the quantity of loads carried at this transportation. It is shown, for example, by the displaying the number of package boxes with predetermined size. A mixed palletizing rate 21-16 shows a rate of the loads carried at this transportation to the total loads of the transportation means to be possible to carry. A shipping time 21-17 shows an actual time when the loads are shipped from the transportation source. An arrival time 21-18 shows an actual time when the loads are delivered to the transportation destination. A first/second transportation 21-19 shows whether this transportation is the first transportation or the second transportation. A physical distribution cost 21-20 shows distribution cost, i.e., an expense that generates in this transportation.

In the above-mentioned data, the transportation source 21-2 to the unit price 21-12 are inputted based on the contract with the transportation company (a distribution company). The volume 21-13 to the physical distribution cost 21-20 are inputted based on the actual shipping.

Next, the code database 22 will be described in detail.

Fig. 4 is a table showing a code database 22. The code database 22 relates the names of the data to the codes, which shows the names, and stores them. It includes a transportation company data 31, a transportation base data 32, a transportation means data 33, a base division data 34 and a transportation route data 35.

The transportation company data 31 relates a transportation company name 31-1 which is the name of the transportation company and a transportation company code 31-2 as the code that is assigned to the transportation company. The transportation base data 32 relates a transportation base name 32-1 which is the name of the transportation base and a transportation base code 32-2 as the code that is assigned to the transportation base. The transportation means data 33 relates transportation means name 33-1 which is the name of the transportation means and a transportation means code 33-2 as the code which is assigned to the transportation means. The base division data 34 relates a base division name 34-1 that is the name of the base division and a base division code 34-2 as the code that is assigned to the base division. The transportation route data 35 relates a transportation route name 35-1 which is the name of the transportation route and a transportation route code 35-2 as the code that is assigned to the transportation route.

Next, the physical distribution result database 23 is described in detail bellow.

The physical distribution result database 23 stores the physical distribution cost result data as the result of the physical distribution cost, which is calculated based on the physical distribution data.
It includes a monthly result data 41, a transportation distance data 42, a daily shipping result data 43, a monthly shipping result data 44 and an annually total result data 45.

Fig. 5 is a table showing a monthly result data 41 in which the data of the physical distribution result is gathered up monthly in accordance with every transportation source. The transportation source 41-1 and the transportation destination 41-2 correspond to the mentioned transportation source 21-2 and the transportation destination 21-4 respectively. An item 41-3 is used for gathering up the result of the physical distribution. The items are, for example, a volume (a square meter), a weight, a quantity, and a number of the transportation, the physical distribution cost results. A month 41-4 shows each month. A data shown in each item 41-3 is inputted respectively in each column in accordance with each month.

Fig. 6 is a table showing a transportation distance data 42 in which the data of the transportation distance results are gathered up monthly in accordance with every transportation means. The transportation means 42-1 corresponds to the mentioned transportation means 21-9. A month 42-2 shows each month. A data showing the transportation distance data of each transportation means is inputted respectively in each column in accordance with each month.

Fig. 7A is a table showing a daily shipping result data 43, Fig. 7B is a table showing a monthly shipping result data 44, and Fig. 7C is a table showing a annually total result data 45.

The daily shipping result data 43 of Fig. 7A is gathering up data related the result of the daily shipping in a date 43-1. Here, the date 43-1, a transportation source 43-2, a transportation destination 43-3, a base division 43-4, a volume 43-5, a weight 43-6, a mixed palletizing rate 43-7, a transportation company 43-8, an unit price 43-9, a transportation distance 43-10, an arrival time 43-11 and a physical distribution cost 43-12, correspond to the shipping time 21-17, the transportation source 21-2, the transportation destination 21-4, the base division 21-5, the volume 21-13, the weight 21-14, the mixed palletizing rate 21-16, the transportation company 21-11, the unit price 21-12, the transportation distance 21-7, the difference between the shipping time 21-17 and the arrival time 21-18 and the physical distribution cost 21-20 of the transportation distance management database 21 respectively.

The monthly shipping result data 44 of Fig. 7B is gathering up data related to the result of the monthly shipping in a month 44-1. Here, the month 44-1, a transportation source 44-2, a transportation destination 44-3, a base division 44-4, a transportation company 44-8 correspond to the shipping time 21-17, the transportation source 21-2, the transportation destination 21-4, the base division 21-5, the transportation company 21-11 of the transportation distance management database 21 respectively. A volume 44-5, a weight 44-6, a transportation distance 44-10, and a physical distribution cost 44-12 correspond to the monthly sum total of the volume 21-13, the weight 21-14, the transportation distance 21-7, and the physical distribution cost 21-20 for each of transportation sources 44-2 in the transportation distance management database 21, respectively. An arrival time 44-11 corresponds to the monthly sum total of the difference between the shipping time 21-17 and the arrival time 21-18. A mixed palletizing rate 44-7 corresponds to the weighted average of the weight 43-6 and the transportation distance 43-10 of the mixed palletizing rate 21-16. Further, a unit price 44-9 corresponds to the value that the physical distribution cost 44-12 is divided by the value of the volume 44-5 and so on.

The annually total result data 45 of Fig. 7C is gathering up data related to the result of the annual shipping in a year 45-1. Here, the year 45-1, a transportation source 45-2, a transportation destination 45-3, a base division 45-4, a volume 45-5, a weight 45-6, a transportation company 45-7, a transportation distance 45-8 and a physical distribution cost 45-9 correspond to the shipping time 21-17, the transportation source 21-2, the transportation destination 21-4, the base division 21-5, the volume 21-13, the weight 21-14, the transportation company 21-11, the transportation distance 21-7 and the physical distribution cost 21-20 of the transportation distance management database 21, respectively.

Next, the emission material result database 24 will be described in detail.

The emission material result database 24 stores the data of the emission material emitting result as the result of the emission material emitting quantity regarding the physical distribution, which is calculated based on the physical distribution data.

It includes a daily emission material quantity result data 51, a monthly emission material quantity result data 52 and an annually total emission material quantity result data 53.

Fig. 8A is a table showing a daily emission material quantity result data 51, Fig. 8B is a table showing a monthly emission material quantity result data 52, and Fig. 8C is a table showing a annually total emission material quantity result data 53. Each data generated according to each kind of emission materials.

The daily emission material quantity result data 51 of Fig. 8A are gathering up data related to the result of the daily emission material quantity in a date 51-1. Here, a transportation means 51-2, a transportation distance 51-3, a mixed palletizing rate 51-4 and a weight 51-5 correspond to the transportation means 21-9, the transportation distance 21-7, the mixed palletizing rate 21-16 and the weight 21-14 of the transportation distance management database 21, respectively. The emission material quantity 51-6 shows the quantity of each of the emission materials (emission material emitting quantity) emitted by the transportation means 51-2 in a day. Here, the quantity of each of the emission materials is calculated by predetermined equation corresponding to each of the emission materials based on the transportation means 51-2, the transportation distance 51-3, the mixed palletizing rate 51-4 and the weight 51-5. The dairy emission material quantity 51-7 shows a sum total of the emission material quantity in a day. It is calculated by the sum of emission material quantity 51-6 in a day.

The monthly emission material quantity result data 52 of Fig. 8B are gathering up data related to the result of the monthly emission material quantity in a month 52-1. Here, a transportation means 52-2 corresponds to the transportation means 21-9 of the transportation distance management database 21. An emission material quantity 52-3 shows the quantity of the emission material (emission material emitting quantity) emitted by the transportation means 52-2 in the month. Here, the quantity is calculated by summing the emission material quantity 51-6 in the month for each of the emission materials of the transportation means 51-2 in the daily emission material quantity result data 51 corresponding to the transportation means 52-2. A monthly emission material quantity 52-4 shows a sum total of the emission material quantity in the month, which is calculated by summing all emission material quantity 52-3 in the month.

The annually total emission material quantity result data 53 of Fig. 8C is gathering up data related to the result of the annual emission material quantity shown in a year 53-1. Here, a transportation means 53-2 corresponds to the transportation means 21-9 of the transportation distance management database 21. An emission material quantity 53-3 shows the quantity of the emission material (emission material emitting quantity) emitted by the transportation means 53-2 in the year. Here, the quantity is calculated by summing the emission material quantity 52-3 in the year for each emission materials of the transmission means 52-2 in the monthly emission material quantity result data 52 corresponding to the transportation means 53-2. An annually emission material quantity 53-4 shows a sum total of the emission material quantity in the year, which is calculated by summing all emission material quantity 53-3 in the year.

Next, the measures simulation database 25 will be described in detail.

The measures simulation database 25 stores a plurality of physical distribution cost reduction measure data, the first reduction rate of them and the fourth reduction rate of them. It further includes a plurality of emission material reduction measure data, the second reduction rate of them and third reduction rate of them. Also, the measures simulation database 25 includes a measure data 60 and a measure assessment data 61.

Fig. 9A is a table showing a measure data 60 and Fig. 9B is a table showing a measure assessment data 61.

The measure data 60 of Fig. 9A shows contents of each measure. A measure No. 60-1 as an identification number is related to a measure data 60-2 indicating the physical distribution cost reduction measures and the emission material reduction measures.

The measure assessment data 61 of Fig. 9B indicates simulation results for the measures shown in Fig. 9A and the assessment results for the simulation results. Numerals, and symbols are examples. Here, a measure No.61-1 as an identification number of measures corresponds to the measure No.60-1. A physical distribution cost 61-2 shows a physical distribution cost (the total) in a month for each measure (for example, in units of 100 million yen). The emission material quantity 61-3 shows the emission material quantity (emission material emitting quantity) (the gross weight) in a month for each measure (for example, in units of ton or kilogram).

The physical distribution cost reduction rate 61-4 shows a reduction rate of the physical distribution cost. It may refer to the first reduction rate for the physical distribution cost reduction measure, and may refer to third reduction rate for the emission material reduction measure. The bigger the negative number is, the more the reduction is.

Also, an emission material reduction rate 61-5 shows the reduction rate of the emission materials. It may refer to the forth reduction rate for the physical distribution cost reduction measure, and may refer to the second reduction rate for the emission material reduction measure. The bigger the negative number is, the more the reduction is. A condition 1 (61-6) shows the former mentioned first condition. "O" indicates that a total reduction rate in each measure exceeds -5%. "X" indicates that it does not exceed -5%. It is note that the total reduction rate is obtained by a following equation.

The total reduction quantity (%)= the

physical distribution cost reduction rate 61-4 +

emission material reduction rate 61-5 (1)

A condition 2 (61-7) shows the former mentioned second condition. "O" indicates that both of the physical distribution cost reduction rate 61-4 and the emission material reduction rate 61-5 in each measure are equal to or less than 0 (negative). "X" indicates that at least one of the physical distribution cost reduction rate 61-4 and the emission material reduction rate 61-5 in each measure are more than 0 (positive).

A condition 3 (61-8) means the former mentioned third condition. "O" indicates that the physical distribution cost in each measure is equal to or less than a predetermined value (for example, 180 million-yen in this case). "X" indicates that the physical distribution cost in each measure is more than the predetermined value.

A condition 4 (61-9) shows the former mentioned fourth condition. "O" indicates that the emission material quantity 61-3 in each measure is equal to or less than a predetermined value (for example, 1.0 ton in this case). "X" indicates that the emission material quantity 61-3 in each measure is more than the predetermined value.

The column of the emission material quantity 61-3 is shown only one in Fig. 9B. In this case, the emission material quantity may be calculated from a single emission material (for example, a carbon dioxide), and it may also be calculated from a plurality of emission materials, which is weighted. The weighted emission material quantity is, for example, a weighted average of the emission quantities of the emission materials by using weighted coefficients set to the emission materials. In other way, it may be set further columns of the emission material quantity 61-3 for each emission material without limiting as Fig. 9B.

Moreover, the column of the emission material reduction rate 61-5 is shown only one in Fig. 9B. In this case, the emission material reduction rate may be calculated from a single emission material (for example, a carbon dioxide), and it may also be calculated from a plurality of emission material reduction rates, which is weighted. The weighted emission material reduction rate is, for example, a weighted average of the emission material reduction rates of the emission materials by using weighted coefficients set to the emission materials. In other way, it may be set further columns of the emission material reduction rate 61-5 for each emission material without limiting as Fig. 9B.

In the above-mentioned case, it is possible to assess each measure synthetically by using all the plurality of emission quantities and the plurality of emission material reduction rate together with the physical distribution cost and the physical distribution cost reduction rate. The conditions for assessing each measure synthetically are exemplified in the following conditions of the fifth condition to the eighth condition.

(1) The fifth condition:

The value, which is calculated by a subtraction of the summation of each emission material reduction rate from the physical distribution cost reduction rate in every plurality of physical distribution cost reduction measure data and plurality of emission material reduction measure data, is equal to or larger than a predetermined value.

(2) The sixth condition:

Both of the physical distribution cost reduction rate and each emission material reduction rate are equal to or larger than a predetermined value in every plurality of physical distribution cost reduction measure data and plurality of emission material reduction measure data.

(3) The seventh condition:

The physical distribution cost when each measure is carried out is equal to or less than a predetermine value.

(4) The eighth condition:

A value of the total summation of the emission material emitting quantity in every emission material when each measure is carried out is equal to or less than a predetermine value.

Next, an operation of the embodiment of the transportation management supporting system in the embodiment of the present invention will be described. Fig. 10 is a flowchart showing the operation of the embodiment of the transportation management supporting system.

It indicates that a new measure is considered based on the result of the physical distribution in this month and the measure is reflected to the physical distribution of next month. That is, comparing a value calculated based on the results and a value based on the measure assumed to be carried out with regard to the physical distribution per one month, an appropriate measure satisfying the predetermined condition is selected. As a result, the appropriate measure is reflected to the distribution in the next month.

(1) Step S1

The company makes a contract of the physical distribution with the transportation company (the distribution firm) at the beginning of the month. A person in charge of distribution or a database administrator (hereinafter, referred to as the person in charge) inputs a part of the physical distribution data to the transportation management supporting system 1 based on the contract from the information terminal 3-i. The physical distribution data includes a transportation source name and its base division name, a transportation destination name and its base division name, a transportation means name, a maximum authorized payload, a transportation company name, a unit price, a classification of first/second transportation and a physical distribution cost. Each of the maximum authorized payload, the classification of first/second transportation, the unit price and the physical distribution cost is inputted as a value indicating by a predetermined unit.

The transportation data management unit 11 of the transportation management supporting system 1 gives the No.21-1 and the identification No.21-8 to the inputted physical distribution data. Then, the part of the physical distribution data is changed into a code based on each data of the code database 22 so as to be stored in a corresponding part of the transportation distance management database 21. For example, the transportation source name and the transportation destination name are changed into codes based on the transportation base data 32 and are stored in the transportation source 21-2 and the transportation destination 21-4, respectively. Their base division names are changed into codes based on the base division data 34 and are stored in the base division 21-3 and the base division 21-5, respectively. The transportation means name is changed into a code based on the transportation means data 33 and is stored in the transportation means 21-9. The transportation company name is changed into a code based on the transportation company data 31 and is stored in the transportation company 21-11. The maximum authorized payload, the unit price, the classification of first/second transportation and the physical distribution cost are stored in the maximum authorized payload 21-10, the unit price 21-12, the first/second transportation 21-19 and the physical distribution cost 21-20.

(2) Step S2

The person in charge of the transportation source inputs a part of the physical distribution data to the transportation management supporting system 1 based on the shipping contents from the information terminal 3-j at the shipping. The physical distribution data to be inputted is a shipping data and a course data. The shipping data is the volume, the weight, the number and the mixed palletizing rate. The course data is the identification No., the transportation source name, the transportation destination name, the transportation route name, the transportation distance, the shipping time and the arrival time. Each data except the transportation source name, the transportation destination name and the transportation route name is inputted as a value indicating by a predetermined unit (rule).

The transportation data management unit 11 of the transportation management supporting system 1 stores the inputted shipping data and the other course data to the corresponding part of the column of the identification No.21-8 of the transportation distance management database 21 which corresponds to the inputted convenience No. For example, the volume, the weight, the number, the mixed palletizing rate, the transportation distance, the shipping time and the arrival time are stored in the volume 21-13, the weight 21-14, the quantity 21-15, the mixed palletizing rate 21-16, the transportation distance 21-7, the shipping time 21-17 and the arrival time 21-18, respectively. The transportation route name is changed into a code based on the transportation route data 35 of the code database 22 by the transportation data management unit 11 so as to be stored in the transportation route 21-6 of the transportation distance management database 21. The transportation source name and the transportation destination name are changed into codes as mentioned above to be used for a confirmation of the coincidence of the data.

In the case of second shipping (for example, shipping to a dealer from the warehouse continuously after the first shipping to the warehouse from a factory), the person in charge of the second transportation destination inputs a part of the physical distribution data to the transportation management supporting system 1 from the information terminal 3-k based on the shipping contents. The physical distribution data to be inputted is a second transportation course data which includes the identification No., the transportation source name, the transportation destination name, the transportation route name, the transportation company name and the transportation means name. The identification No. is inputted as a value indicating by a predetermined rule.

The transportation data management unit 11 of the transportation management supporting system 1 gives No.21-1 newly to the inputted physical distribution data. Then, a part of the inputted the second transportation course data is changed into a code based on a data of the code database 22 so as to be stored in the corresponding part of the transportation distance management database 21. For example, the transportation source name and the transportation destination name are changed into codes based on the transportation base data 32 and are stored in the transportation source 21-2 and the transportation destination 21-4, respectively. The transportation route name is changed into a code based on the transportation route data 35 and is stored in the transportation route 21-6. The transportation company name is changed into a code based on the transportation company data 31 and is stored in the transportation company 21-11. The transportation means name is changed into a code based on the transportation means data 33 and is stored in the transportation means 21-9. Also, the transportation data management unit 11 stores the data that indicates the transportation is the second transportation at first/second transportation 21-19 based on the second transportation course data. It should be noted that the physical distribution cost of the second transportation is included that of the first transportation.

The data regarding the physical distribution (transportation, shipping) can be stored in the transportation distance management database 21 by the above-mentioned step S1 and step S2.

(3) Step S3

The distribution result calculation unit 12 calculates the physical distribution cost result data as the result of the physical distribution cost based on the physical distribution data stored in the transportation distance management database 21 at the end of the month. Here, the distribution result data includes the monthly result data 41 (Fig. 5), the transportation distance data 42 (Fig. 6), the daily shipping result data 43 (Fig. 7A), the monthly shipping result data 44 (Fig. 7B), the annually total result data 45 (Fig. 7C).

The monthly result data 41 (Fig. 5) is generated as follows. Each data corresponding to the item in the item 41-3 is extracted in each transportation destination 41-2 from the transportation distance management database 21. Then, the extracted data are summed monthly.

The transportation distance data 42 (Fig. 6) is generated as follows. The transportation distance 21-7 in a month is extracted in each transportation means 21-9 corresponding to the transportation means 42-1 from the transportation distance management database 21. Then, the extracted transportation distances 21-7 are summed by the transportation means 21-9.

The daily shipping result data 43 (Fig. 7A) is generated as follows. The shipping time 21-17, the transportation source 21-2, the transportation destination 21-4, the base division 21-5, the volume 21-13, the weight 21-14, the mixed palletizing rate 21-16, the transportation company 21-11, the unit price 21-12, the transportation distance 21-7, the arrival time 21-18 and the physical distribution cost 21-20 are extracted from the transportation distance management database 21. Then, they are stored in each transportation source 43-2 so as to be corresponded to the date 43-1, the transportation destination 43-3, the base division 43-4, the volume 43-5, the weight 43-6, the mixed palletizing rate 43-7, the transportation company 43-8, the unit price 43-9, the transportation distance 43-10, the arrival time 43-11 and the physical distribution cost 43-12.

The monthly shipping result data 44 (Fig. 7B) is generated as follows. First, the daily shipping result data 43 (Fig. 7A) is divided into parts corresponding to the transportation sources 43-2. Each of the parts is divided into sub parts corresponding to the transportation destinations 43-3. Each of the sub parts is further divided into further sub parts corresponding to the transportation companies 43-8. Then, in each dividing portion, the volume 43-5, the weight 43-6, the transportation distance 43-10, the arrival time 43-11 and the physical distribution cost 43-12 are summed by a month. Next, each of them is fixed as values of the volume 44-5, the weight 44-6, the transportation distance 44-10, the arrival time 44-11 and the physical distribution cost 44-12 in each of the corresponding transportation source 44-2, the transportation destination 44-3 and the transportation company 44-8. Here, the arrival time 43-11 is the difference between the shipping time 21-17 and the arrival time 21-18. The mixed palletizing rate 44-7 is, for example, calculated by bellow equation.

(weight 43-6 X transportation distance 43-10 X mixed palletizing rate 43-7)/(operation days in a month). The operation days in one month indicates the days in which physical distributions are carried out. The unit price 44-9 is, for example, calculated by dividing the physical distribution cost by at least one of the volume 44-5, the weight 44-6 and the arrival time 44-11.

The annually total result data 45 (Fig. 7C) is generated as follows. First, the monthly shipping result data 44 (Fig. 7B) is divided into parts corresponding to the transportation sources 44-2. Each of the parts is divided into sub parts corresponding to the transportation sources 44-2. Each of the sub parts is further divided into further sub parts corresponding to the transportation companies 44-8. Then, in each dividing portion, the volume 44-5, the weight 44-6, the transportation distance 44-10, the arrival time 44-11 and the physical distribution cost 44-12 are summed by a year. Next, each of them is fixed as values of the volume 45-5, the weight 45-6, the transportation distance 45-8, and the physical distribution cost 45-9 in each of the corresponding transportation source 45-2, the transportation destination 45-3 and the transportation company 45-7.

(4) Step S4

The person in charge makes a plurality of physical distribution cost reduction measure data based on the physical distribution cost result data (that is, the monthly result data 41, the transportation distance data 42, the daily shipping result data 43, the monthly shipping result data 44, the annually total result data 45). Here, the physical distribution cost reduction measure data indicates the measures to reduce a physical distribution cost against the physical distribution cost result (the physical distribution costs 44-12, 45-9). The measures are stored in the measures simulation database 25 as the measure data 60-2.

The measures are exemplified in the followings: selecting a transportation company with the lowest distribution charges in each transportation company, which is in the near the transportation source, based on the table of charges in each transportation company; changing the kind of the transportation means so as to be enable to increase the volume of loads to be transported; synthesizing the loads to be transported efficiently which were separately transported; and changing a transportation route according to timing, time and season to transport and combinations of them. These are just examples and the present invention is not limited by them.

Making the plurality of physical distribution cost reduction measure data may be carried out automatically by the distribution simulation unit 14. For example, using an optimization program is exemplified, in which the program is used to minimize the distribution cost based on the table of charges of each transportation company, the kind of transportation means, the transportation distance, the mixed palletizing rate, the volume, the weight, the number of the articles to transport.

(5) Step S5

The LCA calculation unit 13 calculates the emission material emitting result data as the result of the emission material quantity at the end of the month based on the physical distribution data stored in the transportation distance management database 21, together with the calculating of the physical distribution cost result data by the distribution result calculation unit 12. Here, the data of emission material emitting result indicates the daily emission material quantity result data 51 (Fig. 8A), the monthly emission material quantity result data 52 (Fig. 8B) and the annually total emission material quantity result data 53 (Fig. 8C). Each data is generated for each emission material.

The daily emission material quantity result data 51 (Fig. 8A) is generated as follows. The transportation distance 21-7, the mixed palletizing rate 21-16 and the weight 21-14 are extracted from the transportation distance management database 21 based on each date (the shipping time 21-17) and each transportation means 21-9. Then, each of them is summed by a day. These summed data are stored in the transportation distance 51-3, the mixed palletizing rate 51-4 and the weight 51-5 respectively based on the date 51-1 and the transportation means 51-2. The emission material quantity 51-6 is calculated by using the predetermined function for each of the transportation means 51-2, the emission material and the date 51-1. The function is stored in a function table of the LCA calculation unit 13 (not shown). For example, the function is a function with the transportation means, the transportation distance, the mixed palletizing rate, and the weight. The daily emission material quantity 51-7 is a summation of the emission material quantity 51-6 in accordance with each of the day 51-1. The daily emission material quantity 51-7 may be the summation of them in accordance with each of the day 51-1 and the transportation means 51-2, or each of the day 51-1 and the emission material.

The monthly emission material quantity result data 52 (Fig. 8B) is generated as follows. The emission material quantity 52-3 is calculated by summing a volume of the emission material quantity 51-6 for one month in the daily emission material quantity result data 51 in accordance with each of the transportation means 51-2. The monthly emission material quantity 52-4 is a summation of the emission material quantity 52-3 for one month of all the transportation means 52-2.

The annually total emission material quantity result data 53 (Fig. 8C) is generated as follows. The emission material quantity 53-3 is calculated by summing a volume of the emission material quantity 52-3 for one year in the monthly emission material quantity result data 52 in accordance with each of the transportation means 52-2. The annually emission material quantity 53-4 is a summation of the emission material quantity 53-3 for one year of all the transportation means 53-2.

(6) Step S6

The person in charge makes a plurality of emission material reduction measure data based on the data of emission material emitting result (that is, the daily emission material quantity result data 51, the monthly emission material quantity result data 52, the annually total emission material quantity result data 53). Here, the emission material reduction measure data indicates a measure to reduce the emission material quantity against the result of emission material quantity (that is, the monthly emission material quantity 52-4, the annually emission material quantity 53-4). The measures are stored in the measures simulation database 25 as the measure data 60-2.

The measures are exemplified in the following: searching possible combinations of the transportation means, the transportation distance, the mixed palletizing rate, the weight and so on, which can be used for reducing the emission materials, based on the predetermined function (the function of the transpiration means, the transportation distance, the mixed palletizing rate, and the weight) that can calculate an emission material quantity for each transportation means. These are examples and they do not limit the present invention.

Making the emission material reduction measure data may be carried out automatically by the LCA calculation unit 13. For example, using an optimization program is exemplified, in which the program executes functions (variables: the transportation means, the transportation distance, the mixed palletizing rate, the weight and the like) that can calculates the minimum emission material quantity under the limited condition of the variables.

(7) Step S7

The distribution simulation unit 14 calculates (simulates/estimates) a monthly physical distribution cost (hereinafter, referred to as the first physical distribution cost) in accordance with each of the plurality of physical distribution cost reduction measure data generated at step S4. Here, the monthly physical distribution cost (the first physical distribution cost) is calculated when the physical distribution cost reduction measure is carried out to the physical distribution of the previous month. Then, the first reduction rate as the reduction rate of the first physical distribution cost to the result of the physical distribution cost (the physical distribution cost 44-12) is calculated. The calculated first physical distribution cost and the first reduction rate are stored in the physical distribution cost 61-2 and the distribution reduction rate 61-4 of the measure assessment data 61 in the measures simulation database 25. Here, the first reduction rate is calculated by using the following equation.

The first reduction rate (%) = (the first physical distribution cost - the physical distribution cost 44-12)/(the physical distribution cost 44-12) X 100.

(8) Step S8

The distribution simulation unit 14 calculates (simulates/estimates) a monthly physical distribution cost (hereinafter, referred to as the second physical distribution cost) in accordance with each of the plurality of emission material reduction measure data generated at the step S6. Here, the monthly physical distribution cost (the second physical distribution cost) is calculated when the emission material reduction measure is carried out to the physical distribution of the previous month. Then, the third reduction rate as the reduction rate of the second physical distribution cost to the result of the physical distribution cost (the physical distribution cost 44-12) is calculated. The calculated second physical distribution cost and the third reduction rate are stored in the physical distribution cost 61-2 and the distribution reduction rate 61-4 of the measure assessment data 61 in the measures simulation database 25. Here, the third reduction rate is calculated by using the following equation.

The third reduction rate (%) = (the third physical distribution cost - the physical distribution cost 44-12)/the physical distribution cost 44-12) X 100.

(9) Step S9

The emission material simulation unit 15 calculates (simulates/estimates) a monthly emission material quantity (hereinafter, referred to as the second emission material quantity) in accordance with each of the plurality of emission material reduction measure data generated at the step S6. Here, the monthly emission material quantity (the second emission material quantity) is calculated when the emission material reduction measure is carried out to the physical distribution of the previous month. Then, the second reduction rate as the reduction rate of the second emission material quantity to the result of the emission material quantity (the monthly emission material quantity 52-4) is calculated. The calculated second emission material quantity and the second reduction rate are stored in the emission material quantity 61-3 and the emission material reduction rate 61-5 of the measure assessment data 61 in the measures simulation database 25. Here, the second reduction rate is calculated by using the following equation.

The second reduction rate (%) = (the second emission material quantity - the monthly emission material quantity 52-4)/(the monthly emission material quantity 52-4) X 100.
In this case, a weighted emission material quantity of the plural emission materials is used as the second emission material quantity.

(10) Step S10

The emission material simulation unit 15 calculates (simulates/estimates) a monthly emission material quantity (hereinafter, referred to as the first emission material quantity) in accordance with each of the plurality of physical distribution cost reduction measure data generated at Step 4. Here, the emission material quantity (the first emission material quantity) is calculated when the emission material reduction measure is carried out to the physical distribution of the previous month. Then, the fourth reduction rate as the reduction rate of the first emission material quantity to the result of the emission material quantity (the monthly emission material quantity 52-4) is calculated. The calculated first emission material quantity and the fourth reduction rate are stored in the emission material quantity 61-3 and the emission material reduction rate 61-5 of the measure assessment data 61 in the measures simulation database 25. Here, the fourth reduction rate is calculated by using the following equation.

The fourth reduction rate (%) = (first emission material quantity - (the monthly emission material quantity 52-4)/(the monthly emission material quantity 52-4) X 100.
In this case, a weighted exhaustion quantity of the plural emission materials is used as the first exhaustion quantity.

(11) Step S11

The measures proposal unit 16 reads out necessary data from the physical distribution cost 61-2, the emission material quantity 61-3, the physical distribution reduction rate 61-4 and the emission material reduction rate 61-5 which are stored in the measure assessment data 61 in the measures simulation database 25 based on the assessment condition (for example; the above-mentioned first condition to the fourth condition) to evaluate measure. Then, based on the read data, the measure data that satisfies the assessment condition is selected from the plurality of physical distribution cost reduction measure data and the plurality of exhaustion quantity reduction measure data.

Referring to Fig. 9B, the condition 1 (61-6) indicates an assessment result based on the above-mentioned first condition. Here, the measure proposal unit 16 selects the one ("O") of which a total reduction quantity (%) exceeds -5% (reduction rate 61-4 + reduction rate 61-5 < -5), which satisfy the first condition.

The condition 2 (61-7) indicates an assessment results based on the above-mentioned second condition. Here, the measure proposal unit 16 selects the one ("O") of which both of the physical distribution reduction rate 61-4 and the emission material reduction rate 61-5 are equal to or less than zero (0) (negative), which satisfy the second condition.

The condition 3 (61-8) indicates an assessment results based on the above-mentioned third condition. Here, the measure proposal unit 16 selects the one ("O") of which the physical distribution cost 61-2 is equal to or less than 180 millions yen, which satisfy the third condition.

The condition 4 (61-9) indicates an assessment results based on the above-mentioned forth condition. Here, the measure proposal unit 16 selects the one ("O") where the emission material quantity 61-3 is equal to or less than 1.00 ton, which satisfy the fourth condition.

(12) Step S12

The measure proposal unit 16 reads the measure data (measure data 60-2), which indicates each selected measure, from the measure data 60 and displays it on the display unit. Also it may display just as it is the measure assessment data 61 shown in Fig. 9B.

The person in charge selects an appropriate measure based on the measure data (measure data 60-2) showing each selected measure which is displayed to propose on the display unit, Then, it is reflected to the physical distribution of the next month.

As it has been described up to this, the transportation management supporting system of the present invention is able to calculate the mutual influence of the physical distribution cost reduction measure and the emission material quantity reduction measure. Therefore, it is easy to find the optimal measures in consideration with the balance of the physical distribution cost reduction and the emission material quantity reduction so that the support for physical distribution can be carried out.

Further, the transportation management supporting system of the present invention consolidates data regarding to the single physical distribution. Therefore, the verification of the physical distribution cost reduction measure and the emission material quantity reduction measure can be executed promptly without collecting data of physical distribution from other databases. Then, the result of the verification can be quickly reflected to the proposal of measures.

**Claims**

**1.** A transportation management supporting system comprising:

a transportation managing database configured to store distribution data related to a physical distribution;
a distribution cost calculating section configured to calculate a distribution cost result data indicating a result of a physical distribution cost related to said physical distribution, based on said distribution data;
a distribution simulation section configured to estimate a first physical distribution cost for each of a plurality of cost reduction measures, and to calculate a first reduction rate indicating a reduction rate of said first physical distribution cost to said result of the physical distribution cost for said each of the plurality of cost reduction measures;
an emission material calculating section configured to calculate an emission material result data indicating a result of an emission material emitting quantity related to said physical distribution, based on said distribution data; and
an emission material simulation section configured to estimate a first emission material emitting quantity for each of a plurality of emission material reduction measures, and to calculate a second reduction rate indicating a reduction rate of said first emission material emitting quantity to said result of the emission material emitting quantity for said each of the plurality of emission material reduction measures,

wherein said plurality of cost reduction measures are generated based on said distribution cost result data, and indicates measures for reducing said physical distribution cost against said result of the physical distribution cost,

said plurality of emission material reduction measures are generated based on said emission material result data, and indicate measures for reducing said emission material emitting quantity against said result of the emission material emitting quantity,

said distribution simulation section estimates a second physical distribution cost for said each of the plurality of emission material reduction measures, calculates a third reduction rate indicating a reduction rate of said second physical distribution cost to said result of the physical distribution cost for said each of the plurality of emission material reduction measures, and outputs said first reduction rate and said third reduction rate, and

said emission material simulation section estimates a second emission material emitting quantity for said each of the plurality of cost reduction measures, calculates a fourth reduction rate indicating a reduction rate of said second emission material emitting quantity to said result of the emission material emitting quantity for said each of the plurality of cost reduction measures, and outputs said second reduction rate and said fourth reduction rate.

**2.** The transportation management supporting system according to claim 1, wherein said emission material includes at least one of carbon dioxide, nitrogen oxide, sulfur oxide, hydrocarbon and particulate.

**3.** The transportation management supporting system according to claim 1 or 2, further comprising:

a measure proposal section configured to output one of said plurality of cost reduction measures and said plurality of emission material reduction measures, that satisfies a predetermined condition, based on said first reduction rate, said second reduction rate, said third reduction rate and said fourth reduction rate.

**4.** The transportation management supporting system according to any of claims 1 to 3, wherein said distribution simulation section generates said plurality of cost reduction measures based on said distribution cost result data, and

said emission material simulation section generates said plurality of emission material reduction measures based on said emission material result data.

**5.** A transportation management supporting method comprising:

(a) obtaining distribution data related to a physical distribution;
(b) calculating a distribution cost result data indicating a result of a physical distribution cost related to said physical distribution, based on said distribution data;
(c) estimating a first physical distribution cost for each of a plurality of cost reduction measures, and calculating a first reduction rate indicating a reduction rate of said first physical distribution cost to said result of the physical distribution cost for said each of the plurality of cost reduction measures, wherein said plurality of cost reduction measures are generated based on said distribution cost result data, and indicate measures for reducing said physical distribution cost against said result of the physical distribution cost;
(d) calculating an emission material result data indicating a result of an emission material emitting quantity related to said physical distribution, based on said distribution data; and
(e) estimating a first emission material emitting quantity for each of a plurality of emission material reduction measures, and calculating a second reduction rate indicating a reduction rate of said first emission material emitting quantity to said result of the emission material emitting quantity for said each of the plurality of emission material reduction measures, wherein said plurality of emission material reduction measures are generated based on said emission material result data, and indicate measures for reducing said emission material emitting quantity against said result of the emission material emitting quantity;

(f) estimating a second physical distribution cost for said each of the plurality of emission material reduction measures, and calculating a third reduction rate indicating a reduction rate of said second physical distribution cost to said result of the physical distribution cost for said each of the plurality of emission material reduction measures; and

(g) estimating a second emission material emitting quantity for said each of the plurality of cost reduction measures, and calculating a fourth reduction rate indicating a reduction rate of said second emission material emitting quantity to said result of the emission material emitting quantity for said each of the plurality of cost reduction measures.

**6.** The transportation management supporting method according to claim 5, wherein said emission material includes at least one of carbon dioxide, nitrogen oxides, sulfur oxides, hydrocarbon and particulate.

**7.** The transportation management supporting system according to claim 5, further comprising:

(h) selecting one of said plurality of cost reduction measures and said plurality of emission material reduction measures, that satisfies a predetermined condition, based on said first reduction rate, said second reduction rate, said third reduction rate and said fourth reduction rate; and

(i) displaying said selected measure on a display device.

**8.** The transportation management supporting method according to any of claims 5 to 7, wherein said step (c) comprises:

(c1) generating said plurality of cost reduction measures based on said distribution cost result data, and

said step (e) includes:

(e1) generating said plurality of emission material reduction measures based on said emission material result data.

**9.** A computer program product with program code means for carrying out all steps according to any one of claims 5 to 8 if the program runs on a computer.

**10.** Computer program product with program code means according to claim 9 which are stored on a storage means which can be read by the computer.

Fig. 1

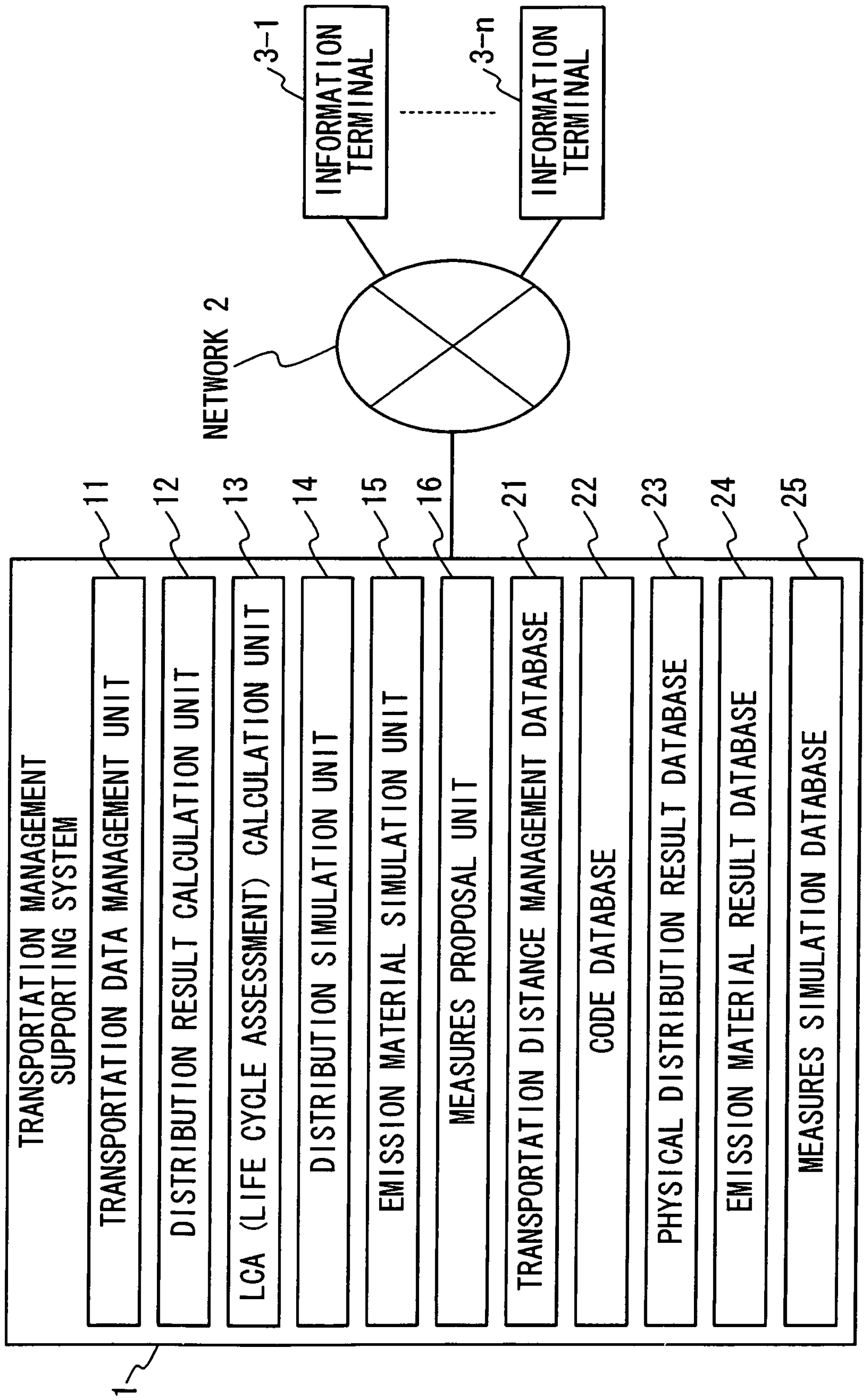
TRANSPORTATION MANAGEMENT SUPPORTING SYSTEM
1
TRANSPORTATION DATA MANAGEMENT UNIT
11
DISTRIBUTION RESULT CALCULATION UNIT
12
LCA (LIFE CYCLE ASSESSMENT) CALCULATION UNIT
13
DISTRIBUTION SIMULATION UNIT
14
EMISSION MATERIAL SIMULATION UNIT
15
MEASURES PROPOSAL UNIT
16
TRANSPORTATION DISTANCE MANAGEMENT DATABASE
21
CODE DATABASE
22
PHYSICAL DISTRIBUTION RESULT DATABASE
23
EMISSION MATERIAL RESULT DATABASE
24
MEASURES SIMULATION DATABASE
25
NETWORK 2
INFORMATION TERMINAL
3-1
INFORMATION TERMINAL
3-n

Fig. 2

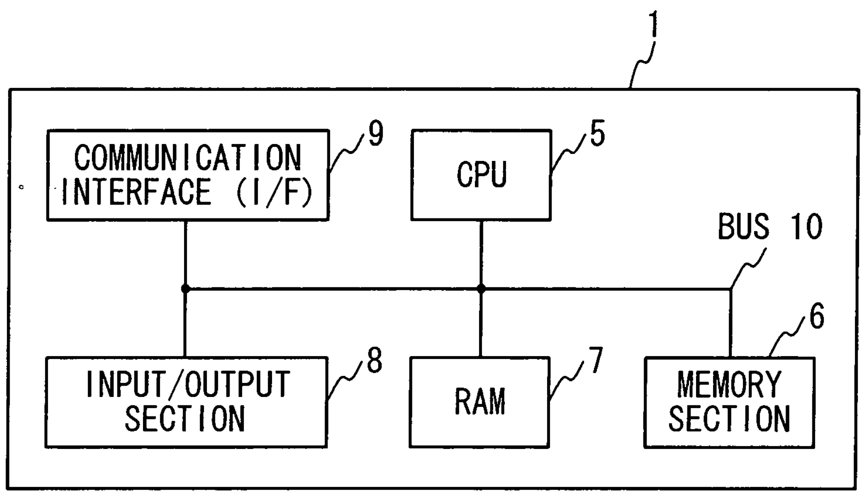
1
COMMUNICATION INTERFACE (I/F)
9
CPU
5
BUS 10
6
INPUT/OUTPUT SECTION
8
RAM
7
MEMORY SECTION

# Fig. 3

21

TRANSPORTATION DISTANCE MANAGEMENT DATABASE

| 21-1 | 21-2 | 21-3 | 21-4 | 21-5 | 21-6 | 21-7 |
|---|---|---|---|---|---|---|
| No. | TRANSPORTATION SOURCE | BASE DIVISION | TRANSPORTATION DESTINATION | BASE DIVISION | TRANSPORTATION ROUTE | TRANSPORTATION DISTANCE |
| 1 | | | | | | |
| ⋮ | ⋮ | ⋮ | ⋮ | ⋮ | ⋮ | ⋮ |

| 21-8 | 21-9 | 21-10 | 21-11 | 21-12 | 21-13 | 21-14 |
|---|---|---|---|---|---|---|
| IDENTIFICATION NO. | TRANSPORTATION MEANS | MAXIMUM AUTHORIZED PAYLOAD | TRANSPORTATION COMPANY | UNIT PRICE | VOLUME | WEIGHT |
| | | | | | | |
| ⋮ | ⋮ | ⋮ | ⋮ | ⋮ | ⋮ | ⋮ |

| 21-15 | 21-16 | 21-17 | 21-18 | 21-19 | 21-20 |
|---|---|---|---|---|---|
| QUANTITY | MIXED PALLETIZING RATE | SHIPPING TIME | ARRIVAL TIME | FIRST/SECOND TRANSPORTATION | PHYSICAL DISTRIBUTION COST |
| | | | | | |
| ⋮ | ⋮ | ⋮ | ⋮ | ⋮ | ⋮ |

Fig. 4

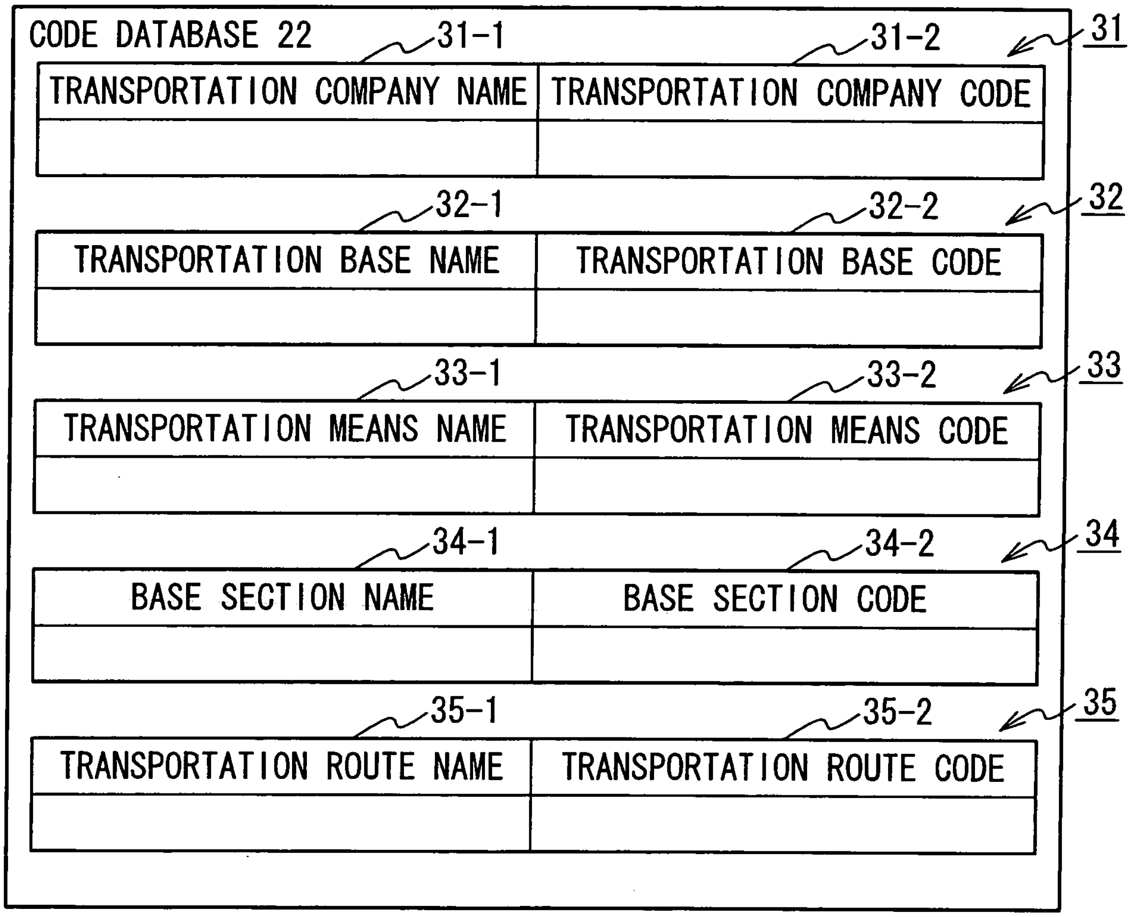
CODE DATABASE 22
31-1
31-2
31
TRANSPORTATION COMPANY NAME
TRANSPORTATION COMPANY CODE
32-1
32-2
32
TRANSPORTATION BASE NAME
TRANSPORTATION BASE CODE
33-1
33-2
33
TRANSPORTATION MEANS NAME
TRANSPORTATION MEANS CODE
34-1
34-2
34
BASE SECTION NAME
BASE SECTION CODE
35-1
35-2
35
TRANSPORTATION ROUTE NAME
TRANSPORTATION ROUTE CODE

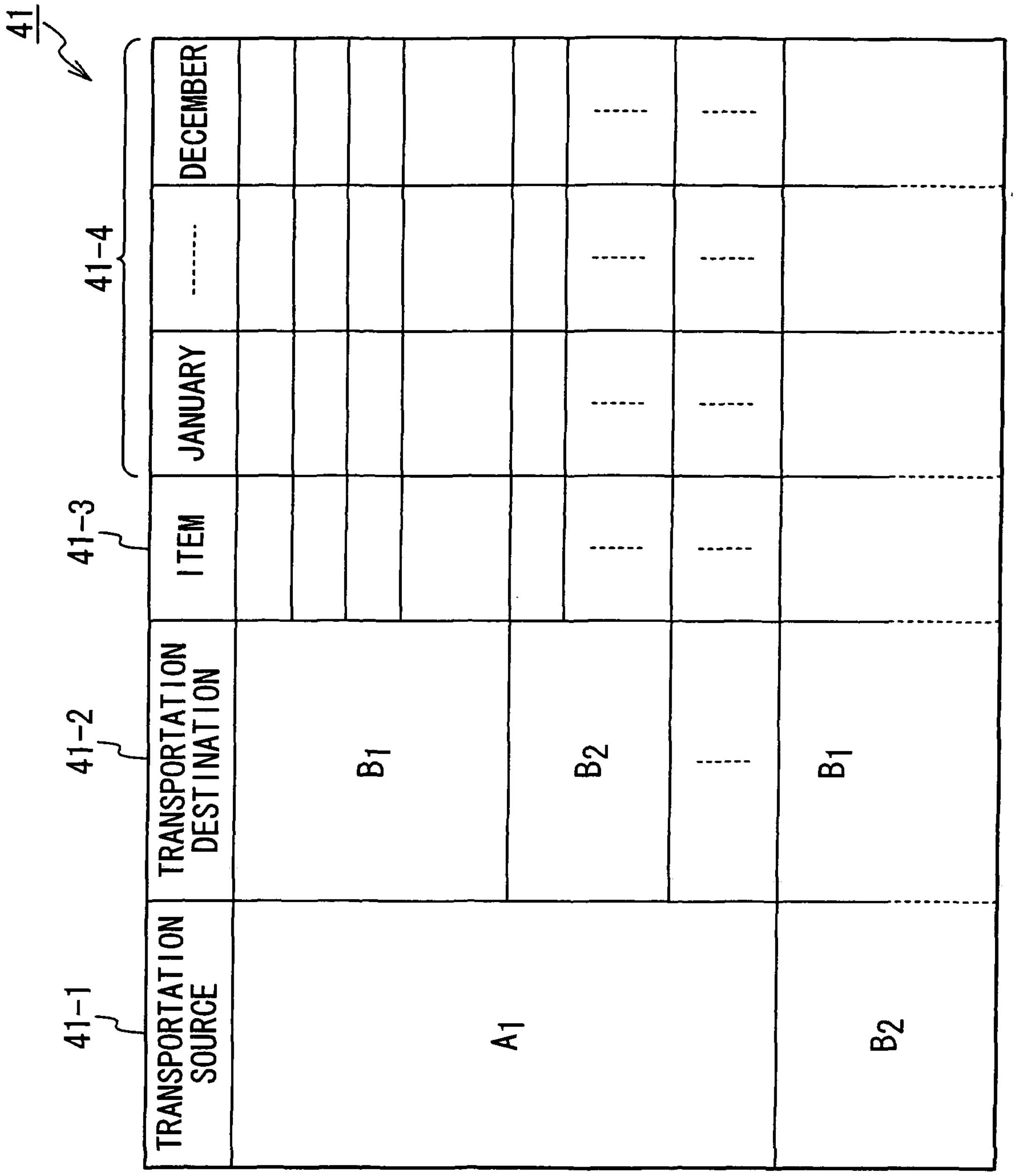
41
41-1
41-2
41-3
41-4
TRANSPORTATION SOURCE
TRANSPORTATION DESTINATION
ITEM
JANUARY
------
DECEMBER
A1
B1
B2
------
B1
B2

Fig. 5

# Fig. 6

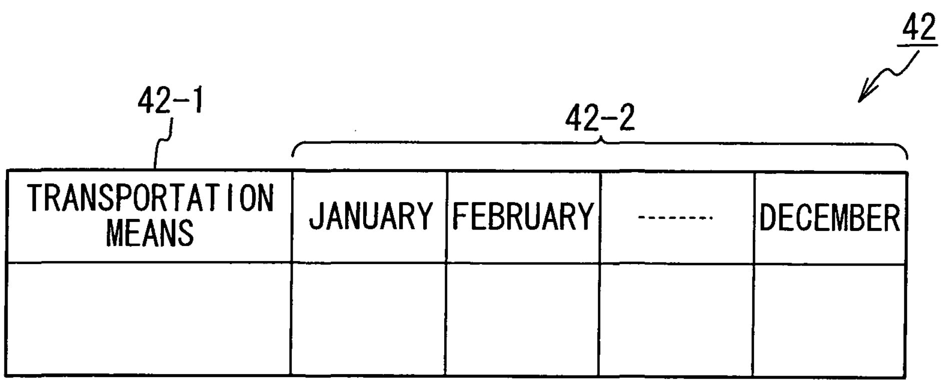
42
42-1
42-2
TRANSPORTATION MEANS
JANUARY
FEBRUARY
--------
DECEMBER

Fig. 7A

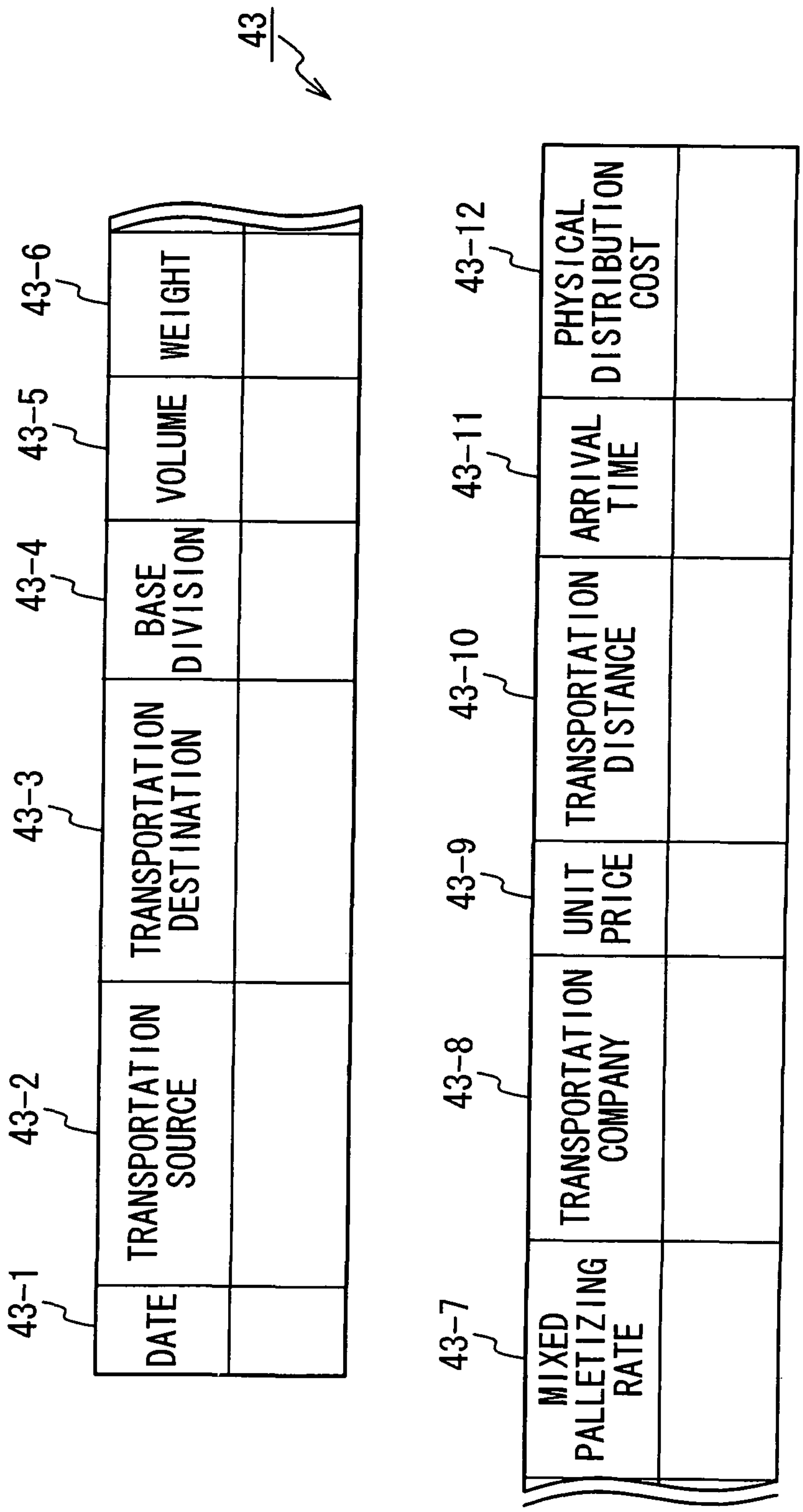
43
43-1
DATE
43-2
TRANSPORTATION SOURCE
43-3
TRANSPORTATION DESTINATION
43-4
BASE DIVISION
43-5
VOLUME
43-6
WEIGHT
43-7
MIXED PALLETIZING RATE
43-8
TRANSPORTATION COMPANY
43-9
UNIT PRICE
43-10
TRANSPORTATION DISTANCE
43-11
ARRIVAL TIME
43-12
PHYSICAL DISTRIBUTION COST

Fig. 7B

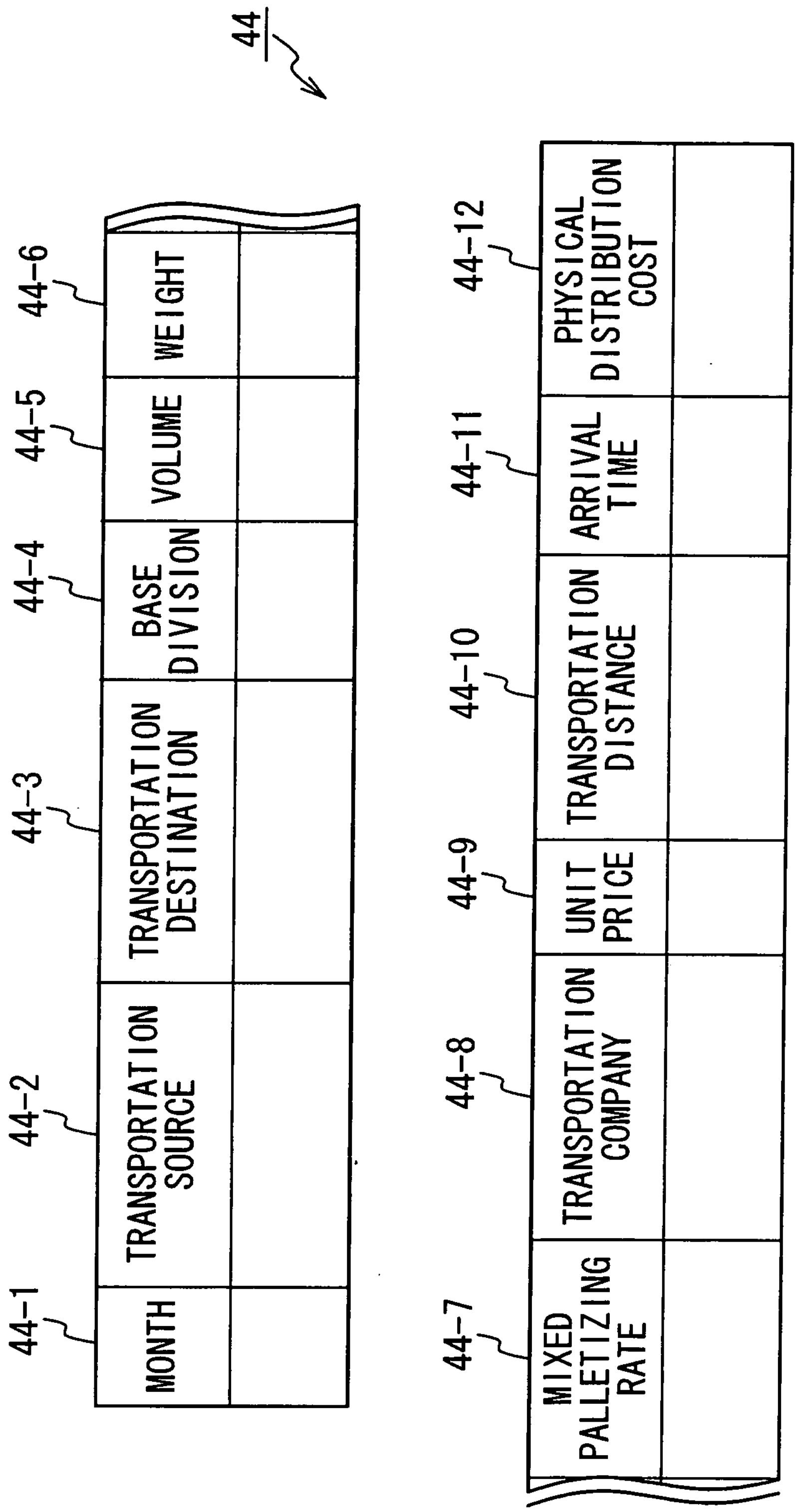
44
44-1
MONTH
44-2
TRANSPORTATION SOURCE
44-3
TRANSPORTATION DESTINATION
44-4
BASE DIVISION
44-5
VOLUME
44-6
WEIGHT
44-7
MIXED PALLETIZING RATE
44-8
TRANSPORTATION COMPANY
44-9
UNIT PRICE
44-10
TRANSPORTATION DISTANCE
44-11
ARRIVAL TIME
44-12
PHYSICAL DISTRIBUTION COST

Fig. 7C

44

| 45-1 YEAR | 45-2 TRANSPORTATION SOURCE | 45-3 TRANSPORTATION DESTINATION | 45-4 BASE DIVISION | 45-5 VOLUME | 45-6 WEIGHT | 45-7 TRANSPORTATION COMPANY | 45-8 TRANSPORTATION DISTANCE | 45-9 PHYSICAL DISTRIBUTION COST |
|---|---|---|---|---|---|---|---|---|
| | | | | | | | | |

# Fig. 8A

51

| 51-1 | 51-2 | 51-3 | 51-4 | 51-5 | 51-6 | 51-7 |
|---|---|---|---|---|---|---|
| DATE | TRANSPORTATION MEANS | TRANSPORTATION DISTANCE | MIXED PALLETIZING RATE | WEIGHT | EMISSION MATERIAL QUANTITY | DAILY EMISSION MATERIAL QUANTITY |
| | GASOLINE-POWERED VEHICLE: 1T | | | | | |
| | GASOLINE-POWERED VEHICLE: 2T | | | | | |
| | ⋮ | ⋮ | ⋮ | ⋮ | ⋮ | |
| | GASOLINE-POWERED VEHICLE: 1T | | | | | |
| | ⋮ | ⋮ | ⋮ | ⋮ | ⋮ | |
| | ⋮ | ⋮ | ⋮ | ⋮ | ⋮ | |

# Fig. 8B

52

| 52-1<br>MONTH | 52-2<br>TRANSPORTATION MEANS | 52-3<br>EMISSION MATERIAL QUANTITY | 52-4<br>MONTHLY EMISSION MATERIAL QUANTITY |
|---|---|---|---|
| | GASOLINE-POWERED VEHICLE: 1T | | |
| | GASOLINE-POWERED VEHICLE: 2T | | |
| | ⋮ | ⋮ | |
| | GASOLINE-POWERED VEHICLE: 1T | | |
| | ⋮ | ⋮ | |
| | ⋮ | ⋮ | |

# Fig. 8C

53

53-1 53-2 53-3 53-4

| YEAR | TRANSPORTATION MEANS | EMISSION MATERIAL QUANTITY | ANNUALLY EMISSION MATERIAL QUANTITY |
|---|---|---|---|
| | GASOLINE-POWERED VEHICLE: 1T | | |
| | GASOLINE-POWERED VEHICLE: 2T | | |
| | ⋮ | ⋮ | |
| | GASOLINE-POWERED VEHICLE: 1T | | |
| | ⋮ | ⋮ | |
| ⋮ | ⋮ | ⋮ | ⋮ |

# Fig. 9A

60-1 60-2

60

| MEASURE NO. | MEASURE DATA |
|---|---|
| 1 | |
| 2 | |
| 3 | |
| 4 | |
| 5 | |
| 6 | |

# Fig. 9B

61

| MEASURE NO. (61-1) | PHYSICAL DISTRIBUTION COST (61-2) | EMISSION MATERIAL QUANTITY (61-3) | PHYSICAL DISTRIBUTION COST REDUCTION RATE (61-4) | EMISSION MATERIAL REDUCTION RATE (61-5) | CONDITION 1 (61-6) | CONDITION 2 (61-7) | CONDITION 3 (61-8) | CONDITION 4 (61-9) |
|---|---|---|---|---|---|---|---|---|
| 1 | 1.6 | 1.15 | -20% | +15% | × | × | ○ | × |
| 2 | 1.8 | 1.02 | -10% | +2% | ○ | × | ○ | × |
| 3 | 1.9 | 0.99 | -5% | -1% | ○ | ○ | × | ○ |
| 4 | 2.2 | 0.80 | +12% | -20% | ○ | × | × | ○ |
| 5 | 2.1 | 0.90 | +5% | -10% | × | × | × | ○ |
| 6 | 2.0 | 0.95 | 0% | -5% | × | ○ | × | ○ |

Fig. 10

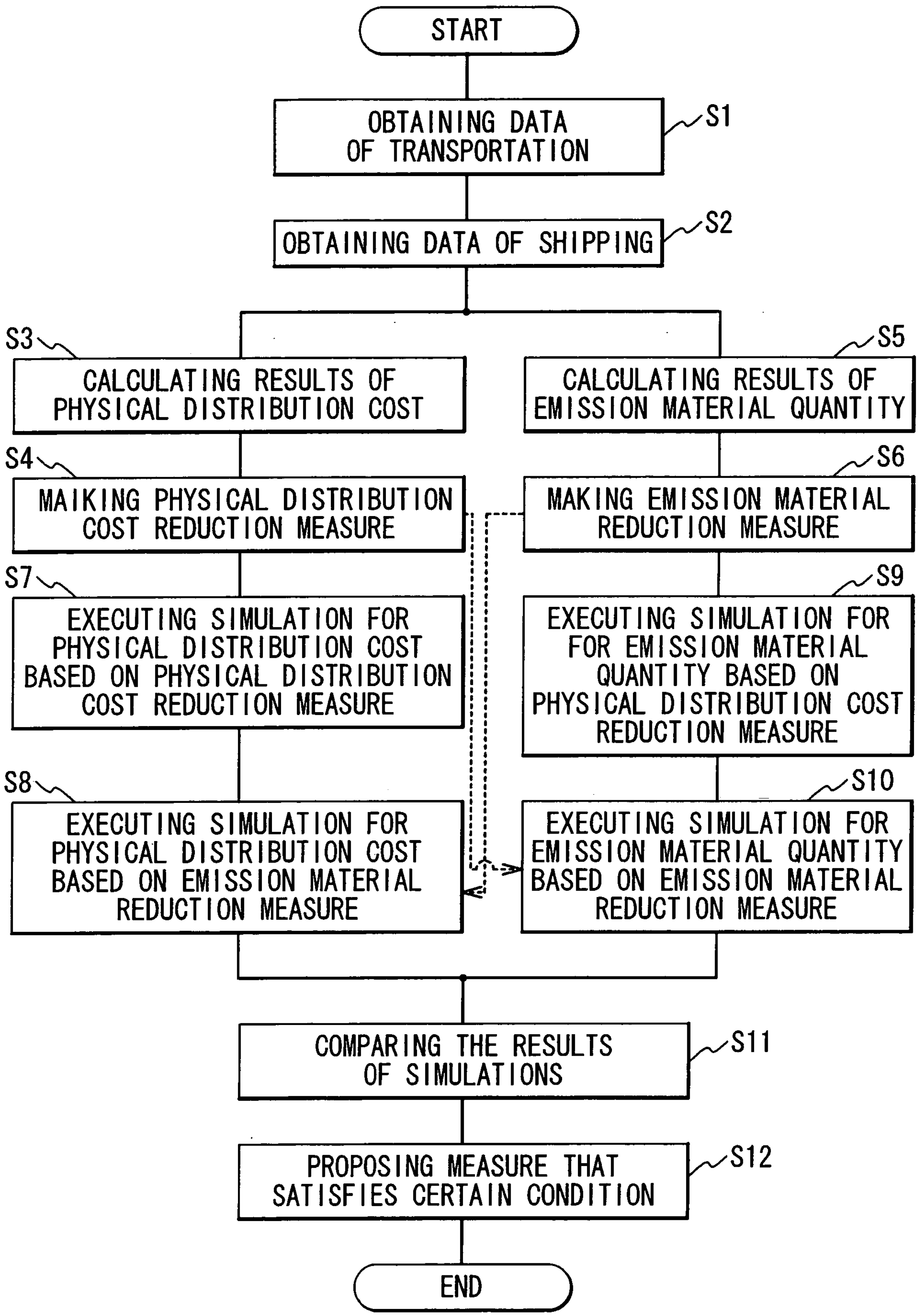
START
OBTAINING DATA OF TRANSPORTATION
S1
OBTAINING DATA OF SHIPPING
S2
S3
CALCULATING RESULTS OF PHYSICAL DISTRIBUTION COST
S5
CALCULATING RESULTS OF EMISSION MATERIAL QUANTITY
S4
MAIKING PHYSICAL DISTRIBUTION COST REDUCTION MEASURE
S6
MAKING EMISSION MATERIAL REDUCTION MEASURE
S7
EXECUTING SIMULATION FOR PHYSICAL DISTRIBUTION COST BASED ON PHYSICAL DISTRIBUTION COST REDUCTION MEASURE
S9
EXECUTING SIMULATION FOR FOR EMISSION MATERIAL QUANTITY BASED ON PHYSICAL DISTRIBUTION COST REDUCTION MEASURE
S8
EXECUTING SIMULATION FOR PHYSICAL DISTRIBUTION COST BASED ON EMISSION MATERIAL REDUCTION MEASURE
S10
EXECUTING SIMULATION FOR EMISSION MATERIAL QUANTITY BASED ON EMISSION MATERIAL REDUCTION MEASURE
COMPARING THE RESULTS OF SIMULATIONS
S11
PROPOSING MEASURE THAT SATISFIES CERTAIN CONDITION
S12
END

## INTERNATIONAL SEARCH REPORT

International application No.
PCT/JP2004/002010

A. CLASSIFICATION OF SUBJECT MATTER
Int.Cl$^7$ G06F17/60

According to International Patent Classification (IPC) or to both national classification and IPC

B. FIELDS SEARCHED

Minimum documentation searched (classification system followed by classification symbols)
Int.Cl$^7$ G06F17/60

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Kazuyoshi OKADA et al., "Jidosha Buhin no Konsai Yuso ni Okeru Yuso Keikaku Model", Operations Research, 01 May, 1997 (01.05.97), Vol.42, No.5, pages 321 to 324 | 1-4,9,10 |
| Y | JP 2002-197158 A (Kabushiki Kaisha Horiba Seisakusho), 12 July, 2002 (12.07.02), Full text; all drawings (Family: none) | 1-4,9,10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 April, 2004 (14.04.04) | 27 April, 2004 (27.04.04) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/002010

**Box No. II Observations where certain claims were found unsearchable (Continuation of item 2 of first sheet)**

This international search report has not been established in respect of certain claims under Article 17(2)(a) for the following reasons:

1. [X] Claims Nos.: 5 to 8
because they relate to subject matter not required to be searched by this Authority, namely:
Claims 5-8 pertain to rules or methods of doing business and fall under Rule 39.1(iii) of the regulations under the PCT.

2. [ ] Claims Nos.:
because they relate to parts of the international application that do not comply with the prescribed requirements to such an extent that no meaningful international search can be carried out, specifically:

3. [ ] Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. [ ] As all required additional search fees were timely paid by the applicant, this international search report covers all searchable claims.

2. [ ] As all searchable claims could be searched without effort justifying an additional fee, this Authority did not invite payment of any additional fee.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**

[ ] The additional search fees were accompanied by the applicant's protest.

[ ] No protest accompanied the payment of additional search fees.

Form PCT/ISA/210 (continuation of first sheet (2)) (January 2004)